# EUROPEAN PATENT APPLICATION

(11) **EP 0 765 051 A2**
(43) Date of publication of application: **26.03.1997**
(21) Application number: 96113767.6
(22) Date of filing: 28.08.1996
(51) Int. Cl.: H04J 14/02, H04B 10/213, H04L 12/28

(54) **Incrementally expandable ring architecture for providing telephony services**

(30) Priority: 19.09.1995 US 530551
(71) Applicant: AT&T Corp., New York, NY 10013-2412 (US)
(72) Inventor: Glance, Bernard, Colts Neck, New Jersey 07722 (US); Kaminow, Ivan P., Holmdel, New Jersey 07733 (US)
(74) Representative: KUHNEN, WACKER & PARTNER

(57) **Abstract**

A telecommunications network is formed from a plurality of interlocked rings. Each interlocked ring includes two switching nodes such that adjacent pairs of interlocked rings have a switching node in common. The interlocked ring also includes first and second telecommunications links that connect the two switching nodes. The first and second telecommunications links include at least one optical fiber adapted for transporting a plurality of wavelength division multiplexed optical channels. Each of the plurality of optical channels is defined by a different wavelength. The first telecommunications link includes at least one branching unit disposed along the at least one optical fiber. The branching unit is adapted to pass predetermined ones of the plurality of optical channels between the switching nodes. The branching unit includes at least one add-drop multiplexer for adding and dropping predetermined ones of the plurality of optical channels to and from a terminal coupled to the branching unit. To provide fault tolerance, at least one of the interlocked rings may further include additional telecommunications links to perform line or path switching.

## Description

### CROSS-REFERENCE TO RELATED APPLICATIONS

This application is related to Application Serial No. 08/350,864 of Bernard Glance et al., entitled "Wavelength Division Multiplexed Hybrid Ring Suitable for Use in Regional Area Networks," filed on December 7, 1994.

### Technical Field

This invention relates to ring networks. More particularly, this invention relates to a wavelength division multiplexed ring suitable for use in regional area networks.

### Background of the Invention

The global fiber optic telecommunications network has been growing rapidly due, in part, to the superior quality of service and high capacity such networks provide. It is estimated that more than 60 countries are presently connected to the global fiber optic network and, by the turn of the century, this number will grow to more than 100. However, there are still many large regions of the globe that are unable to receive the benefits that global communications connectivity brings due, for example, to lack of infrastructure, geographic isolation, and other technical impediments. Moreover, telecommunications may also be limited in the region itself. Although such regions could employ, or may already employ, distributed local area or wide area networks (LANs and WANs, respectively), it is often economically infeasible to provide reliable connectivity among such distributed networks, and connectivity to the present global fiber optic network. Compatibility among divergent network protocols in such a scheme is one example of the connectivity challenge. Furthermore, it is generally imprudent to rely on a series of interconnected LANs and WANs to facilitate the desired regional and global telecommunications capability since unreliable or inefficient operations in a single one of the local networks has the potential to negatively influence the telecommunications performance of the entire region. It is therefore an object of the invention to effect a fiber optic telecommunication network that is suitable for application in regional area networks. One example of such a telecommunication network is disclosed in copending U.S. Appl. Ser. No. 08/350,864. In this network adjacent switching nodes are interconnected by a single telecommunications link such as shown in FIGS. 1 and 2 of that reference. It would be desirable for such a fiber optic telecommunications network to be incrementally expandable while overcoming non-linear optical effects that adversely limit capacity when a large number of channels are carried over large distances.

### Summary of the Invention

These and other objects are provided for by a telecommunications network formed from a plurality of interlocked rings. Each interlocked ring includes two switching nodes such that adjacent pairs of interlocked rings have a switching node in common. The interlocked ring also includes first and second telecommunications links that connect the two switching nodes. The first and second telecommunications links include at least one optical fiber adapted for transporting a plurality of wavelength division multiplexed optical channels. Each of the plurality of optical channels is defined by a different wavelength. The first telecommunications link includes at least one branching unit disposed along the at least one optical fiber. The branching unit is adapted to pass predetermined ones of the plurality of optical channels between the switching nodes. The branching unit includes at least one add-drop multiplexer for adding and dropping predetermined ones of the plurality of optical channels to and from a terminal coupled to the branching unit. To provide fault tolerance, at least one of the interlocked rings may further include additional telecommunications links to perform line or path switching.

### Brief Description of the Drawings

FIG. 1 is a simplified block diagram of an illustrative example of a ring network in accordance with the invention.

FIG. 2 is a simplified diagram showing details of a complete sub-ring that constitutes part of the network shown in FIG. 1.

FIGS. 3 and 4 show alternative embodiments of the invention that provide fault tolerance through path switching and line switching, respectively.

FIG. 5 shows another alternative embodiment of the invention in which each sub-ring includes a single central office.

### Detailed Description

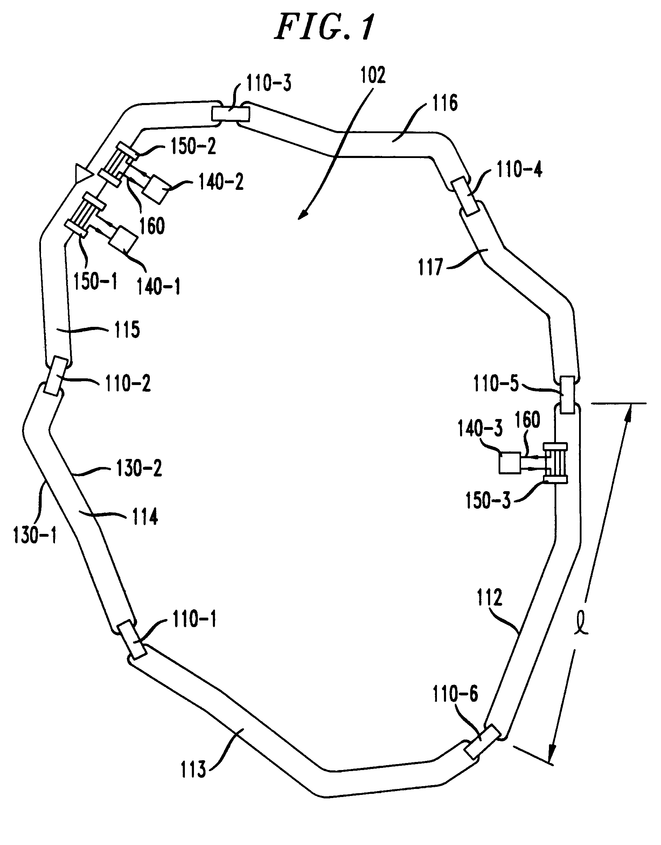

FIG. 1 is a simplified block diagram of an illustrative example of a ring network 100 in accordance with the invention: Ring network 100 may be used, for example, to implement a regional area telecommunications network. The term "region" as used herein is intended to refer to a geographic area for which telecommunications capability is desired. Typically, a region is a large area such as city or even a continent, however, the principles of the invention may also be readily applied to geographic areas served by relatively small LANs, for example, an office building. Ring network 100 includes a plurality of switching nodes, which may be, for example, central offices ("COs") 110. COs 110 are arranged in a ring around region 102, as shown. COs are known in the art and perform a full range of communications traffic networking, for example mapping and switching, according to conventional methods. COs 110 are contemplated to include, for example, optical interfaces, transmission equipment, multiplexing equipment, cross-connect equipment, and switches, such as 4ESS or 5ESS central office switches produced by AT&T. All such devices are known. It is noted that COs 110 may connect other telecommunication offices via transmission facilities that are typically utilized in the art. In this illustrative example, six COs 110 are shown, however, it is contemplated that any number of COs could readily be utilized in applications of the invention. The use of COs in ring network 100 advantageously allows full connectivity and compatibility with other networks external to the ring, including the global fiber optic network. These other networks could include local area, metropolitan area, and wide area networks, as well as public switched telephone networks. An exemplary external connection may include an optical fiber, or telecommunications link 130, as described below.

COs 110 may be coupled using, for example, telecommunications links 130 as shown. Each telecommunications link 130 includes one or more conventional optical fibers that may be, for example, dispersion shifted, single mode optical fibers. Those skilled in the art will recognize that the optical fibers in telecommunications link 130 may be collected in a conventional cable arrangement (not shown). Telecommunications links 130 may be physically deployed on land, undersea, or in combinations thereof. Telecommunications links 130 may additionally include integrated optical repeaters, such as fiber amplifiers, or regenerators (not shown) or be repeaterless. If optical repeaters or regenerators are used, then the above-described cable arrangements may include provision for power conduction to the repeaters, such as conductive lines or sheathing. In this illustrative example, it is intended that ring network 100 employs a series of concatenated fiber amplifiers in each telecommunications link 130. Fiber amplifiers may be, for example, optical fibers which are doped with rare earth elements such as erbium.

In accordance with the present invention, COs 110 are arranged in a series of interlocking sub-rings 112, 113, 114, 115, 116 and 117. For example, CO 110-1 and CO 110-2 form a sub-ring 114 that includes links 130-1 and 130-2. Each sub-ring consists of two neighboring COs, an inner link adjacent region 102 and an outer link remote from region 102. For example, the links 130-2 and 130-1 of sub-ring 114 constitute inner and outer links, respectively.

Disposed along an exemplary telecommunications link 130 are a series of terminals which are typically used to provide telecommunications service connections to localities within the region. The term "locality" as used herein, for example, may refer to a country in a continent, as well as to a suite in an office complex. In this illustrative example the terminals are shown as cable stations 140. Cable stations 140 may be termination points for communications traffic being transported in ring network 100, or may be used as switching node connections to locally deployed LANs and WANs, if desired. In this illustrative example, but not as a limitation on the invention, communications traffic being transported in ring network 100 may comprise digital signals in accordance with International Telecommunications Union Synchronous Digital Hierarchy ("SDH") digital signal formats, including Synchronous Transport Module level 1 ("STM-1") digital signals and Synchronous Transport Module level 16 (STM-16) digital signals.

Each cable station 140 is coupled to telecommunications link 130 using one of a plurality of branching units 150 and one of a plurality of branch cables 160, as shown. Branch cables 160 may include optical repeaters or regenerators, or be repeaterless. The actual number of cable stations 140 used in applications of the invention will depend on the number of optical fibers and wavelengths available. While in this example cable stations 140 are all coupled to inner links 130, the cable stations may alternatively be coupled to the outer links. Further discussion related to cable stations 140, branching units 150, and branch cables 160 is provided below. It is evident that the utilization of interlocking sub-rings of COs 110 advantageously provide for a modular ring network that may be incrementally expanded to encompass additional service area in the region 102 as demand warrants. Accordingly, in accordance with the invention, ring network 100 may take on a number of different topologies, including for example, complete rings, partial rings, busses, or combinations thereof.

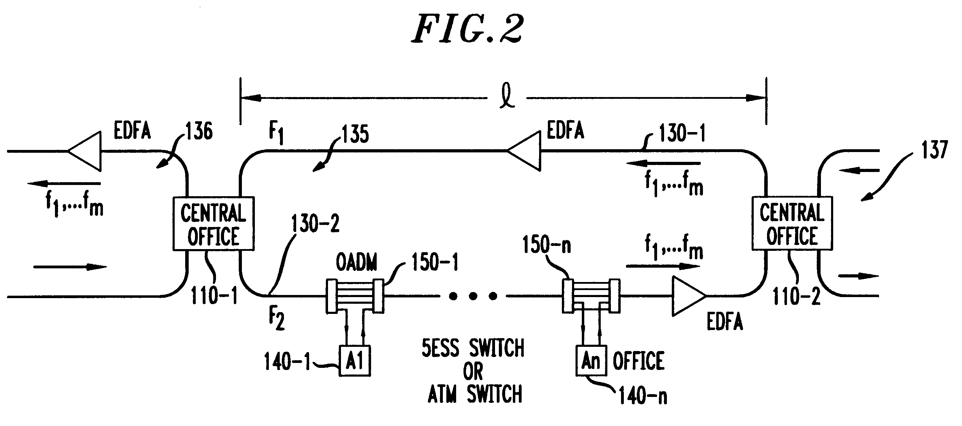

FIG. 2 is a simplified diagram showing one complete sub-ring 135 and two partial sub-rings 136 and 137 which are formed from COs 110-1 and 110-2. FIG. 2 also illustrates operational aspects of the ring network 100. Specifically, telecommunications links 130 carry a plurality of wavelength division multiplexed optical signals. Each link 130, then, carries a plurality of optical channels, where each channel is defined by a different wavelength λ_{N}. In accordance with the principles of the invention, the multiplexed wavelengths are functionally distributed into local or express wavelengths. The local wavelengths within a particular telecommunications link 130 carry communications traffic between COs 110 and cable stations 140. The express wavelengths directly carry communications traffic between COs 110 without communications connectivity to cable stations 140. Thus, for example, wavelengths λ₁ to λₙ may be used for local wavelengths and wavelengths λₙ₊₁ to λₘ may be used for express wavelengths. The ratio of express to local wavelengths may vary in proportion to communication traffic loading and utilization conditions. Such variation may also occur between telecommunications links 130, that is, the ratio between local and express wavelengths may vary from telecommunications link to telecommunications link. Those skilled in the art will further recognize that if the total number of wavelengths exceeds the number of cable stations 140, then an excess bandwidth situation exists. This excess bandwidth can be distributed to the telecommunications links 130 as additional local or express wavelengths, or reserved for future network expansion.

Branching units 150 are utilized to selectively add and drop communications traffic to and from cable stations 140. A particular local wavelength is associated with only one cable station 140 on each link. Express wavelengths on each optical link, which carry communication traffic from CO 110 to CO 110, pass through branching units 150 without being added or dropped. In accordance with the principles of the invention, the above described operations are used within each telecommunications link 130 to achieve a regional area telecommunications network. Accordingly, those skilled in the art will appreciate that the same wavelengths λ_{N} are used in the other optical links 130. The association of a particular local wavelength to only one particular cable station 140 on each link advantageously limits the cable station's ability to negatively affect the operation of the entire ring network 100 should local conditions cause a deterioration in the performance of that particular cable station. Moreover, this advantageous limitation on the local cable station may be further enhanced, in certain applications of the invention, by locating telecommunications links 130 and cable stations 140 in a physically distant location, for example, undersea if warranted.

In accordance with the present invention, the multiplexed wavelengths may be spatially distributed by carrying local traffic exclusively on the links connected to the cable stations 140 (e.g., the inner links in the example of FIG. 1) and both express and local traffic exclusively on the links that are not connected to cable stations 140 (e.g., the outer links in the example of FIG. 1). This aspect of the invention will be illustrated with reference to cable stations 140-1 and 140-n in FIG. 2. To maintain consistency between FIGS. 1 and 2, the link 130-2 in FIG. 2 connected to cable stations 140-1 and 140-n will be referred to as the inner link and the link 130-1 not connected to the cable stations will be referred to as the outer link. However, as noted earlier, the cable stations may be situated on either set of links. Cable station 140-1, operating at a local wavelength λ₁, adds traffic to sub-ring 135 through branch unit 150-1. The wavelength λ₁ travels counterclockwise through CO 110-2, and may continue to CO 110-1, which demultiplexes the traffic from the various cable stations 140, including cable station 140-1 and from sub-ring 136. CO 110-1 then remultiplexes the traffic from the various cable stations which is destined for cable station 140-n and switches it to local wavelength λₙ. Local wavelength λₙ is then passed to the inner link of ring 135 so that local wavelength λₙ can be dropped at cable station 140-n by branch unit 150-n.

Two cable stations on different sub-rings, such as cable stations 140-2 and 140-3 shown in FIG. 1, for example, can communicate with one another by transferring the traffic to an express wavelength. For example, traffic from cable station 140-2, operating at a local wavelength λ₂, is multiplexed onto an express wavelength by CO 110-3. The express wavelength traverses the outer links of the various sub-rings located between cable stations 140-2 and 140-3. CO 110-5 demultiplexes the traffic from the various cable stations 140, including cable station 140-2. CO 110-5 then remultiplexes the traffic from the various cable stations which is destined for cable station 140-3 and switches it to local wavelength λ₃ and passes it to the inner link of the ring 112 so that it can be dropped at cable station 140-3.

Branching units 150 include a plurality of add-drop multiplexers which are coupled to telecommunications links 130. The add-drop multiplexers could comprise, for example, combinations of Fabry-Perot filters, Bragg gratings, couplers and splitters which are well known. Alternatively, add-drop multiplexers may comprise optical channel dropping filters with integrated transceivers as described in United States patent application serial number 08/152,517, the disclosure of which is incorporated by reference herein. Add-drop multiplexers may also comprise optical channel adding/dropping filters as described in United States patent application serial number 08/184,165, the disclosure of which is incorporated by reference herein Add-drop multiplexers may also comprise fast tunable channel dropping filters as described in United States patent application serial number 08/153,523, the disclosure of which is incorporated by reference herein. The add-drop multiplexers may be tuned to selectively add and drop communications traffic at the various wavelengths as discussed above, for example, in response to control signals from a controller. The controller may also be used to control the power distribution in systems that employ repeaters such as, for example, undersea system applications. It should be noted that the controller is optionally utilized for wavelength selection, however, it is preferably used for power distribution by controlling the power configurations states for branching units 150. The controller may be a conventional programmable microprocessor, for example. It may be desirable in some applications of the invention to centrally control the operation of all the controllers in branching units 150.

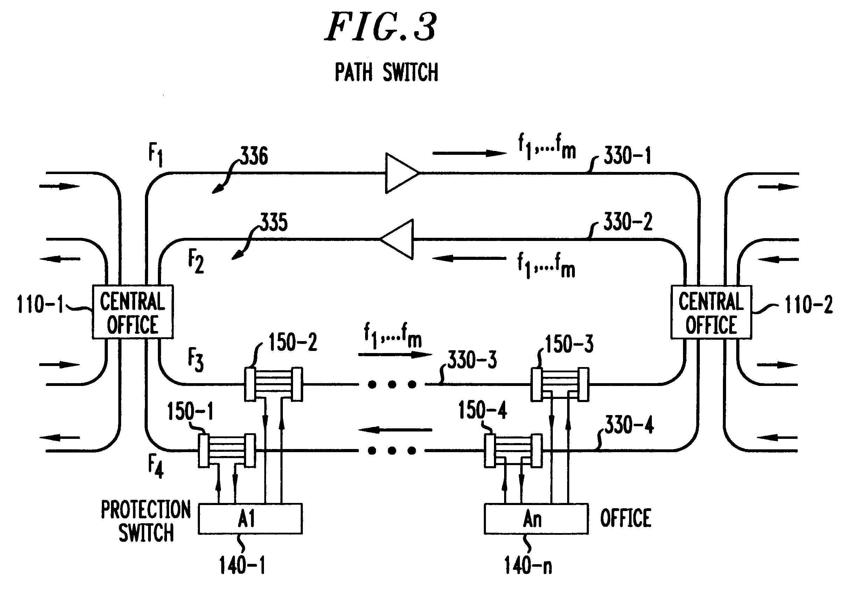

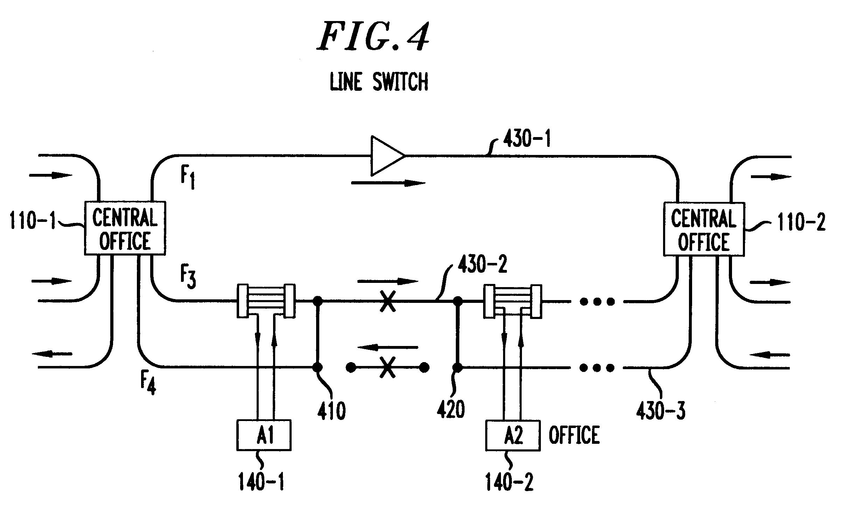

FIGS. 3 and 4 show alternative embodiments of the invention which provide fault tolerance, i.e., communications traffic restoration on the ring in the event of a fault. Faults could include, for example, fiber failures such as a cut, degraded signals, or equipment failures.

FIG. 3 shows a portion of a fully redundant network in which adjacent COs 110 are interconnected by two sub-rings. Specifically, COs 110-1 and 110-2 are inteconnected by inner sub-ring 335 and outer sub-ring 336. Links 330-1 and 330-4 constitute outer sub-ring 336 and links 330-2 and 330-3 constitute inner sub-ring 335. Each sub-ring is connected to each of the cable stations 140 by a distinct branching unit 150. Inner sub-ring 335 drops traffic to cable stations 140-1 and 140-n through branching units 150-2 and 150-3, respectively. Similarly, outer sub-ring 336 drops traffic to cable stations 140-1 and 140-n through branching units 150-1 and 150-4, respectively.

The embodiment of the invention shown in FIG. 3 achieves redundancy with path switching. In normal operation, express traffic can be carried in either direction on links 330-1 and 330-2, respectively, while local traffic can be carried in either direction on links 330-3 and 330-4, respectively. A switch contained in the cable stations 140 selects between the branching units 150 located on links 330-3 and 330-4. If a fault occurs on both links 330-3 and 330-4, to the right of 140-1, for example, cable station 140-1 can receive traffic through branch unit 150-2 on link 330-3 and transmit traffic to CO 110-1 through branch unit 150-1 on link 330-4. Similar path switching can occur for cable station 140-n.

FIG. 4 shows a portion of a partially redundant network that achieves fault tolerance with line switching. In this case COs 110 are interconnected by a single sub-ring formed from links 430-1 and 430-2. However, an additional protection link 430-3 serves as a redundant link with respect to inner link 430-2. Bypass switches 410 and 420 are provided to couple protection link 430-3 to inner link 430-2. Accordingly, if a fault occurs in link 430-2, switches 410 and 420 can be used to route the traffic onto protection link 430-3.

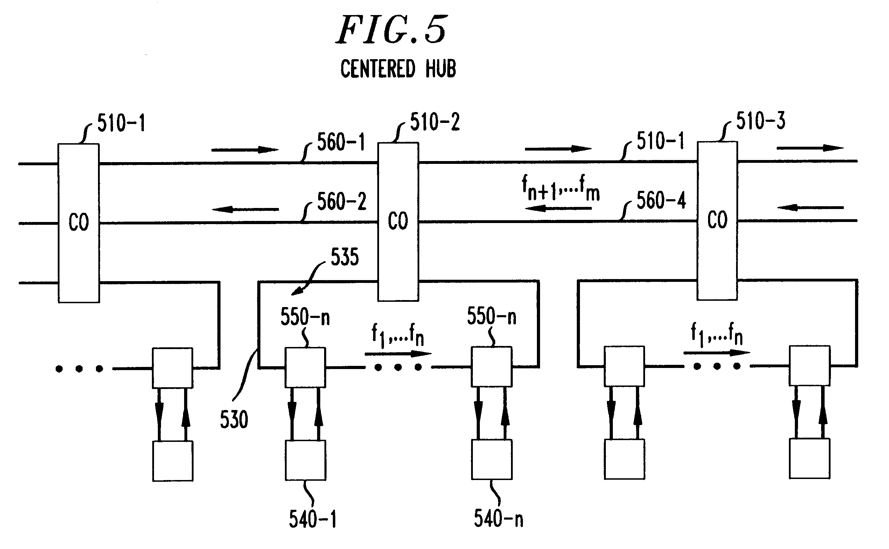

FIG. 5 shows an alternative embodiment of the invention in which each sub-ring includes only a single CO 510. For each sub-ring, a telecommunications link originates and terminates at the CO 510. For example, sub-ring 535 in FIG. 5 includes CO 510-2 and telecommunications link 530. Similar to the previously-described embodiments of the invention, cable stations are distributed along the telecommunications link and are connected thereto by branching units. For example, sub-ring 535 shows terminals 540-1 and 540-n connected to telecommunications link 530 via branching units 550-1 and 550-n, respectively. The COs are connected to one another by telecommunication links that do not constitute part of the sub-rings. For example, FIG. 5 shows links 560-1 and 560-2 connecting CO 510-1 to CO 510-2 and links 560-3 and 560-4 connecting CO 510-2 to CO 510-3. Similar to the previous embodiments of the invention, the COs shown in FIG. may take on a number of different topologies, including for example, complete rings, partial rings, busses, or combinations thereof.

Without in any way affecting the generality of the foregoing description, Table 1 below presents some typical specifications for ring network 100 shown in FIG. 1.

**TABLE 1**

| | |
|---|---|
| No of COs | 8 |
| No. of telecommunications links | 8 |
| No. of cable stations/telecommunication link | 5 |
| Total no. cable stations+COs | 40 |
| No. of different wavelengths, N | 10 |
| Transmission rate per optical channel | 2.5 Gbits/sec |
| Typical telecommunications link length | ≈3750 km |
| Typical cable station to CO cable length | 100-6,000 km |
| Optical channel communications signal format | SDH STM-1/STM-16 |
| No. of uncompressed voice circuits/optical channel | ≈30,000 |

It will be understood that the particular techniques described above are only illustrative of the principles of the present invention, and that various modifications could be made by those skilled in the art without departing from the scope and spirit of the present invention, which is limited only by the claims that follow.

## Claims

1. A telecommunications network, comprising:
a plurality of interlocked rings, each of said interlocked rings including:
(a) two switching nodes such that adjacent pairs of interlocked rings have a switching node in common, each of said interlocked rings further including
(b) first and second telecommunications links connecting said two switching nodes in each of said interlocked rings, the first and second telecommunications links including
at least one optical fiber adapted for transporting a plurality of wavelength division multiplexed optical channels, wherein each of said plurality of optical channels is defined by a different wavelength, and
said first telecommunications link including
at least one branching unit disposed along said at least one optical fiber, wherein said branching unit is adapted to pass predetermined ones of said plurality of optical channels between said switching nodes, said at least one branching unit including at least one add-drop multiplexer for adding and dropping predetermined ones of said plurality of optical channels to and from
(c) a terminal coupled to said at least one branching unit.

2. The network of claim 1 wherein at least one of said interlocked rings further comprises
third and fourth telecommunications links connecting said two switching nodes in a ring arrangement, said third and fourth telecommunications links including
at least one optical fiber adapted for transporting said plurality of wavelength division multiplexed optical channels, and
said third telecommunications link including
at least a second branching unit disposed along said at least one optical fiber, wherein said second branching unit is adapted to pass predetermined ones of said plurality of optical channels between said switching nodes, said at least one second branching unit including at least one add-drop multiplexer for adding and dropping predetermined ones of said plurality of optical channels to and from said terminal.

3. The network of claim 1 wherein at least one of said interlocked rings further comprises:
a third telecommunications link connecting said two switching nodes;
at least one bypass switch for selectively coupling said third telecommunications link to said first telecommunications link.

4. The telecommunications network of claim 1 wherein said telecommunications network has a complete ring topology.

5. The telecommunications network of claim 1 wherein said telecommunications network has a partial ring topology.

6. The telecommunications network of claim 1 wherein said telecommunications network has a bus topology.

7. The telecommunications network of claim 1 wherein said telecommunications network has a combined ring and bus topology.

8. The telecommunications network of claim 1 wherein said telecommunications network has a partial ring topology.

9. The telecommunications network of claim 1 wherein said add-drop multiplexer is selected from the group consisting of Fabry-Perot filters, Bragg gratings, couplers, and splitters.

10. The telecommunications network of claim 1 wherein said add-drop multiplexer is an optical channel adding/dropping filter.

11. The telecommunications network of claim 1 wherein said add-drop multiplexer is an optical channel dropping filter with integrated transceivers.

12. The telecommunications network of claim 1 wherein said add-drop multiplexer is a fast tunable channel dropping filter.

13. The telecommunications network of claim 4 wherein said first telecommunications link is disposed adjacent an interior region of said ring topology.

14. The telecommunications network of claim 4 wherein said first telecommunications link is disposed adjacent an exterior region of said ring topology.

15. A telecommunications network, comprising:
a plurality of rings, each of said rings including:
(a) a switching node;
(b) a telecommunications link having first and second ends connected to said switching node, said telecommunications links including
at least one optical fiber adapted for transporting a plurality of wavelength division multiplexed optical channels, wherein each of said plurality of optical channels is defined by a different wavelength, and
at least one branching unit disposed along said at least one optical fiber, wherein said branching unit is adapted to pass predetermined ones of said plurality of optical channels between said switching nodes, said at least one branching unit including at least one add-drop multiplexer for adding and dropping predetermined ones of said plurality of optical channels to and from
(c) a terminal coupled to said at least one branching unit;
at least one telecommunications link connecting adjacent ones of said plurality of switching nodes.

16. The telecommunications network of claim 15 wherein said telecommunications network has a complete ring topology.

17. The telecommunications network of claim 15 wherein said telecommunications network has a partial ring topology.

18. The telecommunications network of claim 15 wherein said telecommunications network has a bus topology.

19. The telecommunications network of claim 15 wherein said telecommunications network has a combined ring and bus topology.

20. The telecommunications network of claim 15 wherein said telecommunications network has a partial ring topology.

21. The telecommunications network of claim 15 wherein said add-drop multiplexer is selected from the group consisting of Fabry-Perot filters, Bragg gratings, couplers, and splitters.

22. The telecommunications network of claim 15 wherein said add-drop multiplexer is an optical channel adding/dropping filter.

23. The telecommunications network of claim 15 wherein said add-drop multiplexer is an optical channel dropping filter with integrated transceivers.

24. The telecommunications network of claim 16 wherein said add-drop multiplexer is a fast tunable channel dropping filter.
